(19) Europäisches Patentamt

European Patent Office

Office européen des brevets

(11) **EP 1 403 495 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
*F02D 41/40* (2006.01)    *F02D 41/26* (2006.01)

(21) Anmeldenummer: **03015718.4**

(22) Anmeldetag: **10.07.2003**

(54) **Verfahren zum Betrieb einer Kraftstoffeinspritzanlage für einen Verbrennungsmotor**

Method to control a fuel injection apparatus for an internal combustion engine

Procédé de commande d'un dispositif d'injection de carburant pour un moteur à combustion interne

(84) Benannte Vertragsstaaten:
**DE FR GB IT**

(30) Priorität: **25.09.2002 DE 10244538**

(43) Veröffentlichungstag der Anmeldung:
**31.03.2004 Patentblatt 2004/14**

(73) Patentinhaber: **ROBERT BOSCH GMBH**
**70442 Stuttgart (DE)**

(72) Erfinder: **Rohatschek, Andreas-Juergen**
**73249 Wernau/Neckar (DE)**

(56) Entgegenhaltungen:
| | |
|---|---|
| **EP-A- 0 570 986** | **EP-A- 1 114 928** |
| **DE-A- 4 113 958** | **DE-A- 10 041 442** |
| **DE-A- 19 735 721** | **DE-A- 19 937 148** |

**Beschreibung**

Die Erfindung betrifft ein Verfahren zum Betrieb einer Kraftstoffeinspritzanlage für einen wenigstens einen Zylinder aufweisenden Verbrennungsmotor gemäß dem Oberbegriff des Anspruchs 1.

Bei modernen Common-Rail-Einspritzanlagen erfolgt die Einspritzung von Kraftstoff mittels Piezo- oder Magnetventilaktoren, wobei jedem Zylinder wenigstens ein solcher Aktor zur Einspritzung von Kraftstoff in den Zylinder durch Laden oder Entladen des Aktors zugeordnet ist. Eine solche Einspritzanlage geht aus der DE 100 33 343 A1 hervor.

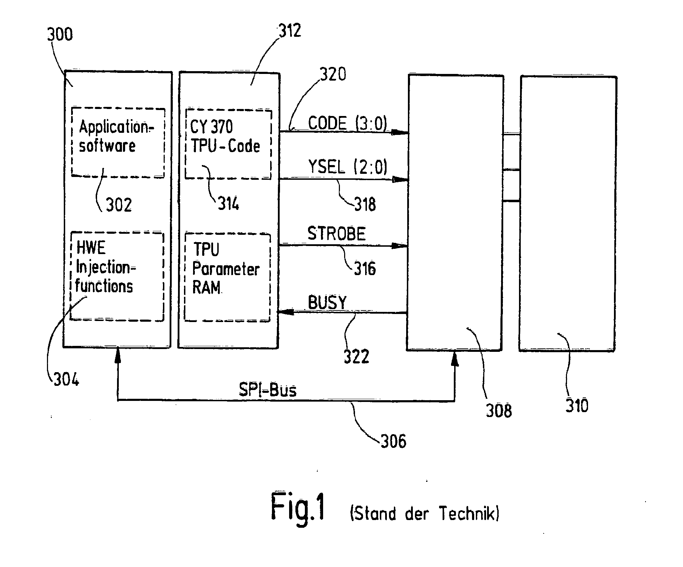

In der dortigen Fig. 1 sind mechanische Baukomponenten einer piezoelektrisch angesteuerten Kraftstoffeinspritzanlage dargestellt. Die Kraftstoffeinspritzanlage umfasst eine Einspritznadel, die eine Einspritzung von Kraftstoff aus einer Kraftstoffdruckleitung in einen Zylinder ermöglicht. Ein piezoelektrisches Element (Aktor) ist mit einem Kolben gekoppelt, wobei das piezoelektrische Element im ausgedehnten Zustand bewirkt, dass der Kolben in einen eine Hydraulikflüssigkeit enthaltenden Hydraulikadapter hineinragt. Dadurch wird ein mit einer Hohlbohrung zusammenarbeitendes Steuerventil hydraulisch von dem Hydraulikadapter weggedrückt und aus einer ersten geschlossenen Stellung wegbewegt. Das Steuerventil befindet sich in einer zweiten, geschlossenen Stellung, wenn das piezoelektrische Element vollständig ausgedehnt ist. Dabei wird die Einspritznadel durch den hydraulischen Druck in der Kraftstoffleitung in einer geschlossenen Stellung gehalten. Somit tritt das Kraftstoffgemisch nicht in den Zylinder ein. Umgekehrt kommt es in der Kraftstoffdruckleitung zu einem Druckabfall, wenn das piezoelektrische Element so erregt wird, dass sich das Steuerventil bzgl. der Hohlbohrung in der sogenannten Mittelstellung befindet. Dieser Druckabfall bewirkt in der Kraftstoffdruckleitung ein Druckgefälle zwischen dem oberen Ende und dem unteren Ende der Einspritznadel, so dass die Einspritznadel sich hebt und ein Einspritzen von Kraftstoff in den Zylinder ermöglicht.

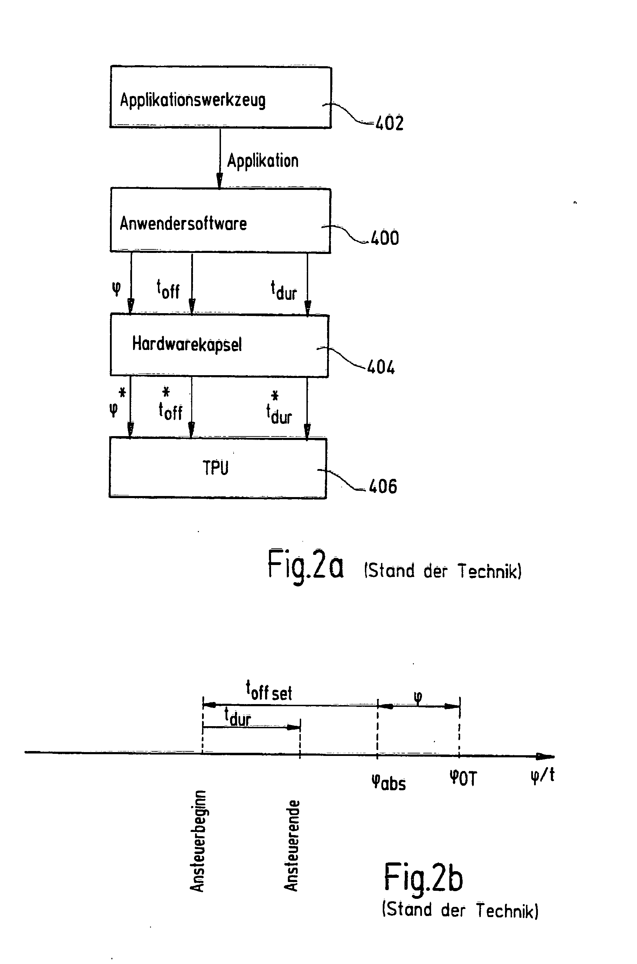

Die dortige Fig. 2 zeigt die genannten piezoelektrischen Elemente schematisch, und zwar zusammen mit einer elektrischen Schaltungsanordnung zur Steuerung der Kraftstoffeinspritzanlage. Ein erster Schaltungsbereich 'A' dient zum Laden und Entladen der piezoelektrischen Elemente. Ein zweiter Schaltungsbereich 'B' umfasst eine Einspritzregelung 'F' mit einem Steuergerät 'D' und einem Ansteuerungs-IC 'E'. Dem Ansteuerungs-IC 'E' werden verschiedene Messwerte von elektrischen Spannungen und Strömen aus der gesamten restlichen Schaltungsanordnung zugeführt. Die piezoelektrischen Elemente sind dabei in zwei Gruppen aufgeteilt, wobei zwischen den Gruppen mittels eines Gruppenwahlschalters umgeschaltet wird. Es sind Treiber implementiert, die von dem Ansteuerungs-IC 'E' empfangene Steuersignale in Spannungen umformen, die nach Bedarf zum Schließen und Öffnen der Schalter wählbar sind. Während Ladevorgängen werden die Gruppenwahlschalter von Dioden überbrückt. Die Funktionalität der Gruppenwahlschalter reduziert sich daher auf die Auswahl einer Gruppe der piezoelektrischen Elemente lediglich für einen Entladevorgang. Durch Schließen und Öffnen eines Ladeschalters bzw. Entladeschalters in Abhängigkeit des Stromes ist es möglich, den Ladestrom und den Entladestrom auf vorgegebene Mittelwerte einzustellen und/oder zu verhindern, dass sie vorgegebene Maximalwerte und/oder Minimalwerte überschreiten bzw. unterschreiten. Für diese Messung wird zusätzlich eine Spannungsquelle benötigt, die eine Gleichspannung von +5 V liefert sowie ein Spannungsteiler in Form zweier Widerstände. Damit wird der Ansteuerungs-IC, der die Messungen durchführt, vor negativen Spannungen geschützt. Auf die weiteren Details dieser Schaltungsanordnung kommt es jedoch vorliegend nicht an, so dass hierzu lediglich auf die genannte Druckschrift verwiesen wird.

Bei den vorbeschriebenen Einspritzanlagen besteht nun insbesondere die Möglichkeit, Voreinspritzungen mit einer Zeitkomponente zu applizieren (Fig. 2b). Dabei wird ein Kurbelwellenwinkel des Verbrennungsmotors, bezogen auf einen oberen Totpunkt (OT) der Kurbelwelle, vorgegeben sowie eine Zeitkomponente bezogen auf einen absoluten Kurbelwellenwinkel, der sich aus dem applizierten Relativ- und dem OT-Winkel ergibt. Die Applikation mit Zeitkomponenten soll sicherstellen, dass der zeitliche Abstand zwischen zwei Einspritzmengen unabhängig von der aktuellen Motordrehzahl, eingehalten wird.

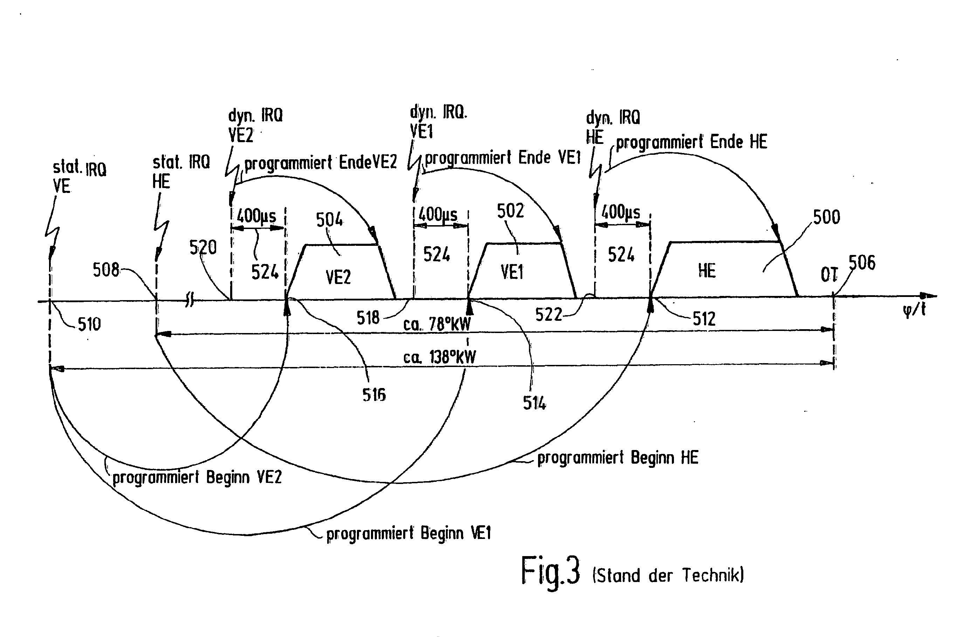

Um den genannten Anforderungen zu genügen, weisen diese Kraftstoffeinspritzanlagen meist einen ersten in Form einer ersten Rechnereinheit zur Abarbeitung der Applikationsvorgaben und zur Ausführung von Regelungsvorgängen sowie einer zweiten Rechnereinheit zur zeitgesteuerten Ansteuerung von elektrischen Endstufen (Fig. 3), welche letztlich die genannten Aktoren antreiben, auf.

Die genannte zeitliche Ansteuerung der Einspritzungen erfolgt insbesondere in Abhängigkeit von einem von einem Kurbelwellendrehzahlgeber bereitgestellten, meist rechteckförmigen Drehzahlgebersignal. Der zeitliche Verlauf des Drehzahlgebersignals ist aufgrund von äußeren Einflüssen wie einer zu niedrigen Versorgungsspannung der Motorelektrik, mechanischen Schwingungen insbesondere der Kurbelwelle und/oder Resonanzerscheinungen an der Kurbelwelle, Schwankungen unterworfen. Diese Unregelmäßigkeiten in der Periodizität des Drehzahlgebersignals, der so genannte "Jitter", sind demnach durch einen von Null verschiedenen Wert dn/dt charakterisiert, wobei n die Motordrehzahl und t die Zeit darstellen. Es ist hierbei anzumerken, dass die Dynamik des Drehzahlgebersignals prinzipiell sogar höher sein kann als die mechanische Dynamik der Kurbelwelle und daher der Jitter des Drehzahlgebersignals gegenüber den genannten Drehzahlschwankungen durchaus dominieren kann.

Diese Drehzahlschwankungen können bei der Applikation der genannten drehzahlunabhängigen Zeitkomponenten zur Ansteuerung der Aktoren eine zeitliche Überlappung bzw. ein zeitliches Ineinanderlaufen zweier Einspritzphasen bzw. Einspritztypen verursachen. Dadurch kann es zu einem vorzeitigen Abbruch der Ansteuerungen oder sogar zur Dauereinspritzung kommen, wodurch die Zylinder des Verbrennungsmotors übermäßig mit Kraftstoff gefüllt werden, was wiederum zu einer unkontrollierten Verbrennung und letztlich zu einem Motorschaden führen kann.

Es ist grundsätzlich bekannt, die genannten Schwankungen des Drehzahlgebersignals durch geeignete Steuerprogramme zur zeitlichen Ansteuerung der Einspritzungen in gewissem Rahmen auszugleichen.

Die DE 100 41 442 A1 beschreibt ein Verfahren zum Betreiben einer Kraftstoffeinspritzanlage. Bei diesem Verfahren wird die Einspritzung in eine Voreinspritzung, eine Haupteinspritzung und eine Nacheinspritzung aufgeteilt. Die Berechnung der Ansteuersignale für die Einspritzung erfolgt in zwei Schritten. In einem so genannten Pilotinterrupt, der ca. 120° Kurbelwelle vor dem Zünd-OT liegt, werden die Daten für die Voreinspritzung und in einem Maininterrupt, der ca. 60° Kurbelwelle vor dem Zünd-OT liegt, werden die Daten für die Haupt- und Nacheinspritzungen berechnet.

Die DE 199 37 148 A beschreibt ein Verfahren zum Betrieb einer Kraftstoffeinspritzanlage, bei dem die Einspritzung in einer Vor- und eine Haupteinspritzung aufgeteilt wird. Aufgrund der Voreinspritzung verändert sich der Kraftstoffdruck, was wiederum zu einer Veränderung der eingespritzten Kraftstoffmenge bei der Haupteinspritzung führt. Diese Druckschwingung wird durch geeignete Korrekturkennfelder korrigiert. Hierzu erfolgt die Berechnung der Haupteinspritzung auf Grundlage der Daten der Voreinspritzung.

Mit der gleichen Problematik beschäftigt sich auch die EP 0 570 986 A1. Um die Einflüsse der Druckwellen zu kompensieren, wird auch hier die Haupteinspritzung aufgrund von Daten der Voreinspritzung berechnet.

Mit der genannten Vorgehensweise lässt sich allerdings nicht sicher verhindern, dass bei den genannten Schwankungen des Drehzahlgebersignals eine zeitlich nachfolgende Einspritzung bereits vor der Beendigung einer jeweils vorhergehenden Einspritzung beginnt. Obgleich auch die Drehzahldynamik über eine Drehzahlerfassung grundsätzlich zur Verfügung steht, werden bei den bekannten Kraftstoffeinspritzanlagen mittels der genannten zweiten Rechnereinheit unmittelbar die Flanken des Drehzahlgebersignals ausgewertet. Bis jedoch die Reaktion der Drehzahlerfassung bezüglich einer Programmierung der Einspritzungen wirkt, hat die zweite Rechnereinheit möglicherweise bereits ineinander laufende (sog. "korrupte") Einspritzungen programmiert. D.h. auch in diesen Fällen muss sichergestellt sein, dass daraus keine Block- oder Dauereinspritzung resultiert.

Diese Problematik tritt insbesondere dann auf, wenn eine Einspritzung in mehrere Einspritzphasen aufgeteilt wird. Solche Einspritzphasen werden üblicherweise als Voreinspritzung, Haupteinspritzung und/oder Nacheinspritzung bezeichnet.

Der vorliegenden Erfindung liegt deshalb die Aufgabe zugrunde, ein Verfahren der eingangs genannten Art dahingehend weiterzuentwickeln, dass eine vor beschriebene zeitliche Überlappung aufeinander folgender Einspritzphasen im gesamten Drehzahlbereich, auch im Falle einer hohen Drehzahldynamik, d.h. einem stark steigenden oder stark fallenden Drehzahlgebersignal, möglichst sicher vermieden wird.

Die Aufgabe wird gelöst durch die Merkmale des unabhängigen Anspruchs 1. Vorteilhafte Ausgestaltungen sind Gegenstand der Unteransprüche.

Das erfindungsgemäße Verfahren sieht insbesondere vor, dass der Programmierzeitpunkt einer Einspritzphase von der jeweils vorausgehenden Einspritzphase abhängig gemacht wird. Der genaue Zeitpunkt der eigentlichen Ausführung der programmgemäßen Einspritzphase verliert daher an Bedeutung hinsichtlich des Risikos einer Überlappung.

In einer bevorzugten Ausgestaltung findet das Verfahren Anwendung bei Kraftstoffeinspritzungen mit einer Haupteinspritzung und wenigstens zwei zeitlich aufeinander folgenden Voreinspritzungen, wobei die Programmierung der Einspritzungen mittels statischer und dynamischer Interrupts erfolgt. Erfindungsgemäß wird dabei die Programmierung einer Einspritzung aus einem dynamischen Interrupt (sog. "erweiterter" dynamischer Interrupt) einer jeweils vorausgehenden Einspritzung heraus durchgeführt.

Die Vorteile des erfindungsgemäßen Verfahrens liegen darin, dass auch bei hoher Drehzahldynamik und zeitlich eng benachbarter Einspritzphasen, insbesondere zeitlich nahe vor einer Haupteinspritzung erfolgende Voreinspritzungen, sowie bei auftretendem Jitter des Drehzahlsignals bzw. Drehzahlgebersignals die Schwelle zum Ineinanderlaufen von Einspritzungen deutlich heraufgesetzt wird. Dadurch ist auch bei Drehzahljitter und sehr hoher Drehzahldynamik ein akzeptabler Betrieb der Kraftstoffeinspritzanlage möglich. Zudem wird ein automatisches Abstellen der Einspritzungen verhindert und damit die Verfügbarkeit der Kraftstoffeinspritzanlage insgesamt erhöht.

Die Erfindung wird nachfolgend, unter Bezugnahme auf die beigefügte Zeichnung, anhand bevorzugter Ausführungsbeispiele eingehender erläutert, aus denen weitere Merkmale und Vorteile der Erfindung hervorgehen.

Im Einzelnen zeigen

Fig. 1 in Blockdarstellung elektrische Komponenten zur Ansteuerung einer hier betroffenen Kraftstoffeinspritzanlage;

Fig. 2a,b eine typische Architektur eines Steuerprogramms zur Ansteuerung einer Kraftstoffeinspritzanlage gemäß dem Stand der Technik (a) sowie die zugrundeliegenden zeitlichen Zusammenhänge bei der Ansteuerung in einem Zeitdiagramm (b);

Fig. 3 den zeitlichen Verlauf von statischen und dynamischen Interrupts bei der Ansteuerung nach dem Stand der Technik;

Fig. 4 ein Zeitdiagramm einer Ansteuerung einer Kraftstoffeinspritzanlage mit zwei Voreinspritzungen bei konstanter Motordrehzahl gemäß dem Stand der Technik;

Fig. 5 eine der Fig. 4 ähnliche Darstellung einer Ansteuerung einer Kraftstoffeinspritzanlage gemäß dem Stand der Technik bei sich kurzzeitig erhöhender Motordrehzahl;

Fig. 6 den zeitlichen Verlauf von statischen und dynamischen Interrupts bei einer erfindungsgemäßen Ansteuerung;

Fig. 7 eine der Fig. 2a ähnliche Darstellung der Architektur eines Steuerprogramms zur Ansteuerung einer Kraftstoffeinspritzanlage gemäß der Erfindung; und

Fig. 8 eine der Fig. 5 entsprechende Darstellung der Ansteuerung einer Kraftstoffeinspritzanlage gemäß der Erfindung mit zwei Voreinspritzungen bei sich kurzzeitig erhöhender Motordrehzahl.

DETAILLIERTE BESCHREIBUNG BEVORZUGTER AUSFÜHRUNGSBEISPIELE

In der Fig. 1 sind aus dem Stand der Technik bekannte elektrische Baukomponenten zur Ansteuerung einer eingangs beschriebenen Kraftstoffeinspritzanlage vereinfacht dargestellt. Eine erste Rechnereinheit 300 weist in an sich bekannter Weise einen Steueralgorithmus (Applicationsoftware) 302 auf. Zusätzlich sind im Voraus beispielsweise empirisch berechnete Einspritzfunktionen (Injectionfunctions) 304 vorgesehen. Die erste Rechnereinheit 300 ist über einen Bus 306 mit einem Ansteuerbaustein 308 einer Endstufe (Powerstages) 310 verbunden. Über den Bus 306 werden weitere Steuersignale an den Ansteuerbaustein 308 übertragen, welche allerdings in dem vorliegenden Zusammenhang ohne Bedeutung sind.

Eine mit der ersten Rechnereinheit 300 zusammenarbeitende zweite Rechnereinheit 312 dient, ebenfalls an sich bekannt, zur hochpräzisen zeitlichen Ansteuerung der eingangs beschriebenen Piezo-Aktoren in Echtzeit, und zwar in Abhängigkeit von dem nachfolgend noch im Detail beschriebenen Ansteueralgorithmus. Die zweite Rechnereinheit 312 enthält zu diesem Zweck ein (nicht gezeigtes) Drehzahlerfassungsteil und ein (ebenfalls nicht gezeigtes) Ansteuerungsteil zur genannten zeitlichen Steuerung der Einspritzungen bzw. Einspritzphasen. Die zweite Rechnereinheit 312 weist ferner Programmmittel 314 zur Ausführung einer nachfolgend noch genauer beschriebenen Extrapolation der Motordrehzahl n auf.

Die zweite Rechnereinheit 312 ist mit dem Ansteuerbaustein 308 ferner über eine oder mehrere Datenleitungen 316 - 322 verbunden, über die Steuersignale wie bspw. die gezeigten Handshake-Signale 316, 322 übertragen werden. Weitere Ausführungen zu diesen Datenleitungen 316 - 322 erübrigen sich im vorliegenden Zusammenhang.

Die Fig. 2a zeigt ein Blockdiagramm eines Steuerprogrammes zur Ansteuerung einer vorbeschriebenen Kraftstoffeinspritzanlage gemäß dem Stand der Technik. Das Steuerprogramm wird in dem vorliegenden Beispiel in Form eines Anwendungsprogrammes 400 mittels eines an sich bekannten Applikationswerkzeuges 402 erstellt. Dem Anwendungsprogramm liegen als physikalische Parameter der bezüglich eines oberen Totpunktes (OT) relative Kurbelwellenwinkel (KW-Winkel) Phi eines (nicht gezeigten) Verbrennungsmotors, ein Zeitoffset t_off für die Einspritzung, sowie eine Ansteuerdauer t_dur zugrunde. Die Parameter Phi und t_off sind in einem sogenannten statischen Interrupt und der Parameter t_dur in einem sogenannten dynamischen Interrupt programmiert (Fig. 3). Diese physikalischen Parameter werden mittels einer hardware-nahen Software 404 in ein für die zweite Rechnereinheit taugliches Format Phi*, t_off* und t_dur* übergeführt und danach an die zweite Rechnereinheit 406 übermittelt. Die genannten Parameter sind entweder im Voraus in Tabellen abgelegt oder nachträglich per Fernübertragung (remote) in das System einspeisbar.

In der Fig. 2b sind die im Stand der Technik bei der Ansteuerung einer vorbeschriebenen Kraftstoffeinspritzanlage zugrundeliegenden zeitlichen Zusammenhänge schematisch illustriert. Als Bezugsgröße bei der Berechnung der Parameter dient in an sich bekannter Weise der genannte obere Totpunkt (OT) der Kurbelwelle. Zunächst wird der relative Beginnwinkel Phi vom OT zurück gerechnet (Phi_abs). Von Phi_abs ausgehend wird dann erst der Offsetwert t_off zurück gerechnet, wobei sich der jeweilige Ansteuerbeginn einer Einspritzung bzw. Einspritzphase ergibt. Vom Ansteuerbeginn ausgehend wird dann mittels des Parameters t_dur das jeweilige Ansteuerende berechnet.

Es ist hervorzuheben, dass beim erfindungsgemäßen Steuerprogramm die Zeitkomponenten t_off und t_dur anhand der aktuellen Motordrehzahl n in einen korrespondierenden KW-Winkel Phi' umgerechnet und der ersten Rechnereinheit zur Ansteuerung übergeben werden. Dies hat den Vorteil, dass die genannten Schwankungen der Drehzahl n, die letztlich das mögliche Ineinanderlaufen der Voreinspritzungen verursachen, bei der nachfolgend beschriebenen Programmierung der Beginnflanken der Ansteuersignale für die Aktoren automatisch Berücksichtigung finden.

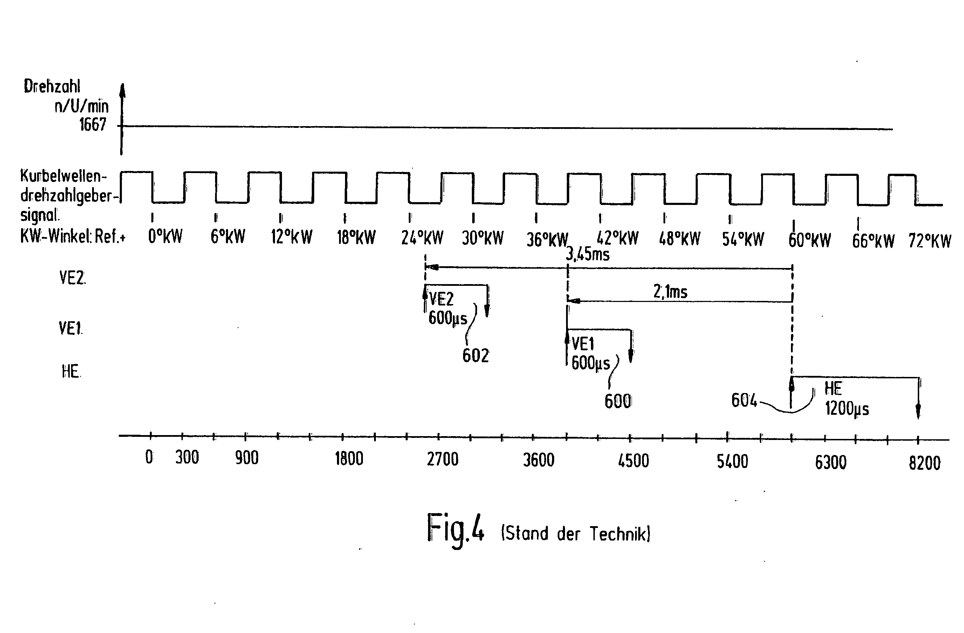

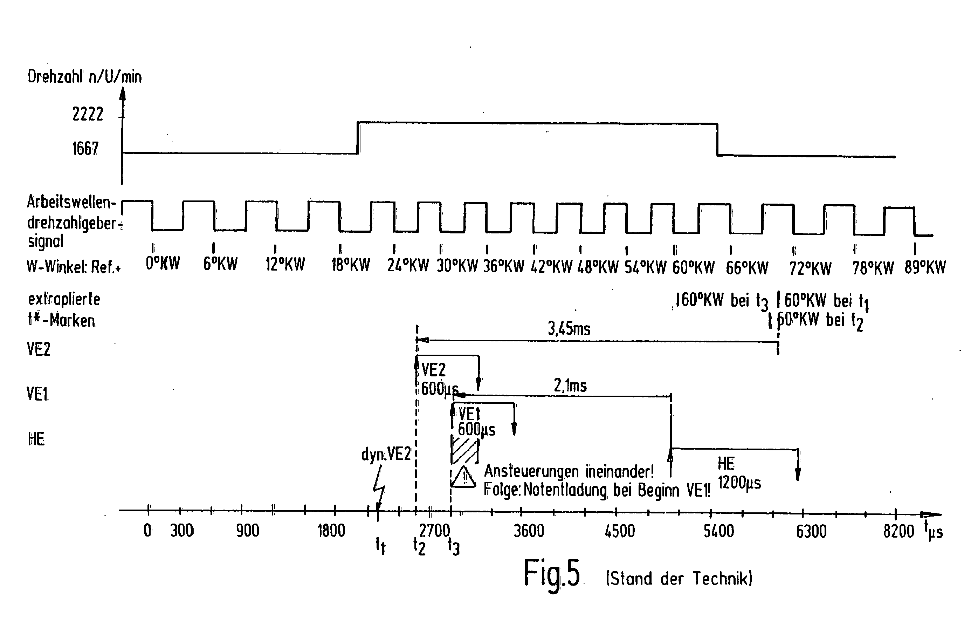

Der zeitliche Verlauf der Ansteuerung der Kraftstöffeinspritzanlage erfolgt im Stand der Technik mittels der bereits vorerwähnten statischen und dynamischen Interrupts. Dies ist in der Fig. 3 anhand eines in einem Zeitdiagramm dargestellten, aus einer Haupteinspritzung ‚HE' 500 und zwei Vöreinspritzungen ‚VE1' und 'VE2' 502, 504 bestehenden Kraftstoffeinspritzzyklusses illustriert. Es ist anzumerken, dass entsprechend der vorliegend gewählten Notation die 'VE2' zeitlich vor der 'VE1' zu liegen kommt, d.h. entgegen der Zahlenreihenfolge. In dem Zeitdiagramm sind die entsprechenden Ansteuersignale für die Kraftstoffeinspritzung über den zeitabhängigen (Fig. 4 und Fig. 5) KW-Winkel Phi (t) aufgetragen.

Von einem oberen Totpunkt 'OT' 506 der Kurbelwelle ausgehend werden zunächst statische, d.h. zeitlich fest vorgegebene Interrupts, IRQ_stat_HE' 508 und 'IRQ_stat_VE ' 510 zur Ansteuerung der Beginnflanke 512 der Haupteinspritzung sowie der Beginnflanken 514, 516 beiden Voreinspritzungen für die Vergangenheit berechnet. Der relative Abstand des ‚IRQ_stat_VE' 510 vom OT 506 beträgt dabei in dem Ausführungsbeispiel ca. +140° und des 'IRQ_stat_ HE' ca. +80°. Ausgehend vom statischen Interrupt 'IRQ_stat_VE' 510 werden nun die Beginnflanken 514, 516 für die Ansteuerung der beiden Voreinspritzungen 'VE1' und 'VE2' und vom statischen Interrupt IRQ_stat_HE' 508 die Beginnflanke 512 der Haupteinspritzung ‚HE' programmiert. Die statischen Interrupts 508, 510 weisen demnach jeweils einen festen Winkelbezug zum OT 506 auf, wobei von diesen die Beginnflanken der jeweiligen Ansteuersignale, wie eben beschrieben, programmiert werden.

Von den Beginnflanken ausgehend werden die dynamischen Interrupts für jedes der Ansteuersignale bzw. Einspritzphasen 'VE2' 504, 'VE1' 502 und HE' 500 berechnet. In dem vorliegenden Beispiel werden dynamische Interrupts 'IRQ_dyn_VE2' '520''IRQ_dyn_VE1 '518 und 'IRQ_dyn_HE' 522 durch Rückberechnung sogenannter Event-synchroner Interrupts im festen zeitlichen Abstand 524 vor Beginn der Einspritzung. Mittels der dynamischen Interrupts 518 - 522 werden nun die auf den Winkel Phi bezogenen Längen der Ansteuersignale bzw. die Beginne der abfallenden Signalflanken der Ansteuersignale programmiert.

Aus der Fig. 3 kann ferner die folgende weitere Problematik im Stand der Technik entnommen werden. Der statische Interrupt der Voreinspritzungen 'IRQ_stat_VE' 510 liegt zeitlich relativ weit vor dem OT 506. Im Falle, dass die Voreinspritzungen 'VE2' 504 und 'VE1' 502 zeitlich so appliziert werden, dass diese nahe am OT 506 zu liegen kommen, ist die zeitliche Distanz zwischen dem statischen Interrupt 'IRQ_stat_VE' 510 und der Beginnansteuerung 514 so groß, dass bei üblicher Drehzahldynamik der Fehler, der bei der genannten Umrechnung der Zeitkomponente in einen KW-Winkelanteil im statischen Interrupt resultiert, relativ groß wäre. Die Umrechnung der Zeit- in entsprechende Winkelkomponenten ist aber im Falle der erfindungsgemäßen Vorgehensweise unkritisch und aus den nachfolgend noch genannten Gründen sogar höchst vorteilhaft.

Es ist anzumerken, dass die vorbeschriebenen, in der zweiten Rechnereinheit durchgeführten Berechnungen im vorliegenden Ausführungsbeispiel auf den bspw. in der Fig. 4 dargestellten fallenden Flanken des von der Kurbelwelle bereitgestellten Drehzahlgebersignals basieren.

Das in der Fig. 4 dargestellte Diagramm zeigt eine zeitliche Ansteuerung einer Kraftstoffeinspritzanlage wieder mit zwei Voreinspritzungen 600, 602 und einer Haupteinspritzung 604 bei konstanter rechteckförmiger Motor- bzw. Kurbelwellendrehzahl n gemäß dem Stand der Technik. Die Kurbelwellendrehzahl beträgt in dem Beispiel n = 1667 U/min. Über der im unteren Teil des Diagrammes dargestellten Zeitachse (Maßstab µs) aufgetragen sind dabei ein im oberen Teil des Diagrammes dargestelltes streng-periodisches, rechteckförmiges Kurbelwellendrehzahlgebersignal (KW-DGS) sowie, in Form von Pfeilen dargestellt, die Beginn- und Endeflanken der vorbeschriebenen Ansteuersignale 'VE2', 'VE1' und ‚HE'. Die bei der Berechnung der Ansteuersignale zugrundeliegenden abfallenden Flanken des KW-DGS liegen, beginnend bei 0°, bei Vielfachen des KW-Winkels 6°, d.h. 12°, 18°, usw. Der zeitliche Abstand zwischen der abfallenden Flanke des Ansteuersignals 'VE2' und der Beginnflanke des Ansteuersignals 'VE1' beträgt vorliegend etwa (3,45 - 2;1) ms = 1,35 ms und ist ausreichend, um eine zeitlich überlappende Ansteuerung mit den eingangs genannten nachteiligen Folgen für die Kraftstoffeinspritzanlage bzw. den Verbrennungsmotor sicher zu vermeiden.

Im Gegensatz zur Fig. 4 zeigt die Fig. 5 die bei der Ansteuerung gemäß dem Stand der Technik sich ergebenden Verhältnisse bei einer kurzzeitig von n = 1667 auf n = 2222 U/min erhöhten Motordrehzahl, der sogenannte "Jitter". Diese Unregelmäßigkeit führt dazu, dass die basierend auf den abfallenden Flanken des KW-DGS berechneten Ansteuersignale 'VE2' und 'VE1' vorliegend für etwa 200 µs im gestrichelten Zeitbereich überlappen. Diese Überlappung führt in der Regel dazu, dass mit Beginn der Voreinspritzung 'VE1' eine Notentladung erfolgt, was zum Ausbleiben von Einspritzungen und zum Abstellen führen kann, wodurch die Verfügbarkeit eingeschränkt wird. Die Ursache der überlappenden Ansteuerung liegt somit letztlich darin, dass die Berechnung der statischen Interrupts auf der Grundlage des KW-Winkels erfolgt, wohingegen die Programmierung der ansteigenden Flanken der Ansteuersignale sowie der dynamischen Interrupts und daher auch der Ansteuersignaldauern auf Zeitbasis erfolgt.

Es versteht sich, dass die in der Fig. 5 gewählten Zahlengrößen nur beispielhaft sind und ausschließlich zur besseren Darstellung der funktionalen Zusammenhänge dienen. Ebenso dient der übertrieben dargestellte unstetige Dtehzahlvetlauf lediglich zur Vereinfachung der Darstellung.

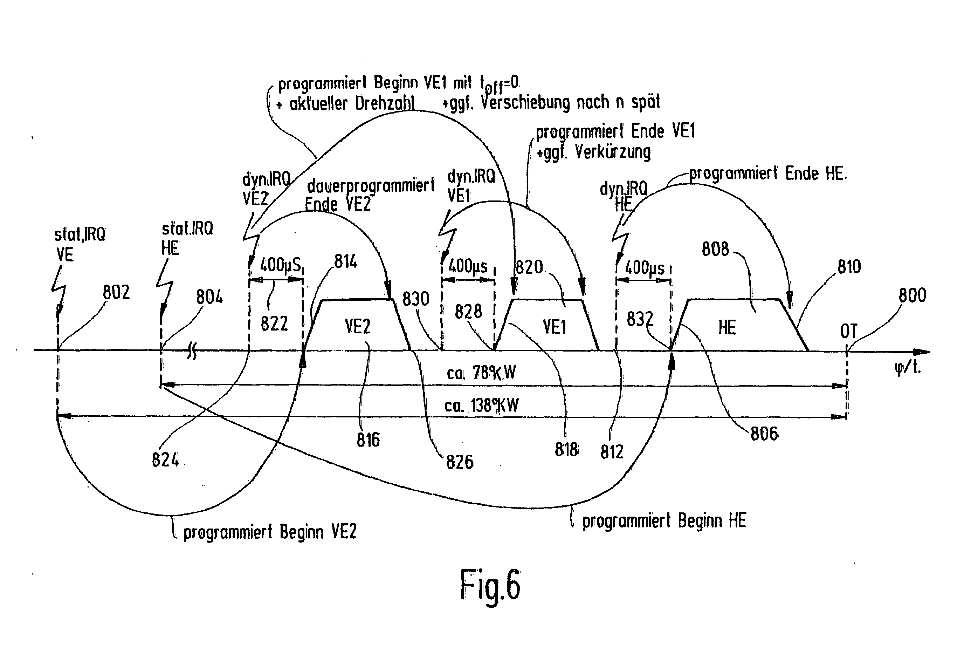

Das Auftreten der in der Fig. 5 gezeigten technisch höchst problematischen Ansteuersituation wird erfindungsgemäß mittels der in der Fig. 6 illustrieren Berechnung der statischen und dynamischen Interrupts sicher vermieden. Ausgehend vom OT 800 werden zunächst, wie im Stand der Technik, statische Interrupts 'IRQ_stat_VE' 802 und ' IRQ_stat_HE' 804 in Einheiten des KW-Winkels festgelegt. Die Winkelwerte entsprechen in dem Ausführungsbeispiel denen der Fig. 3. Die Programmierung der Beginnflanke 806 der Haüpteinspritzüng ,HE' 808 erfolgt auch hier basierend auf dem statischen Interrupt 'IRQ_stat_HE' 804. Zudem erfolgt die Festlegung des dynamischen Interrupts ,IRQ_dyn_HE' 812 der Haupteinspritzung 808 sowie die Programmierung der Endeflanke 810 der Hampteinspritzung 804 entsprechend der Fig. 3.

Im Unterschied zum Stand der Technik (Fig. 3) wird mittels des statischen Interrupts 'IRQ_stat_VE' 802 nur die Beginnflanke 814 der zuerst erfolgenden Voreinspritzung ' VE2' 816, jedoch nicht die Beginnflanke 818 der nachfolgenden Voreinspritzung 'VE1' 820 programmiert. Daher wird über den Ansteuerbeginn von 'VE2' 816 mittels der bereits genannten Event-synchronen Interrupts im festen zeitlichen Abstand 822 vor Beginn der Einspritzung nur der dynamische Interrupt 'IRQ_dyn_VE2' 824 der früheren Voreinspritzung 'VE2' 816 festgelegt. Dieser sozusagen "erweiterte" dynamische Interrupt erfüllt, im Gegensatz zum Stand der Technik, nunmehr zwei Funktionen. Zum Einen dient er als Ausgangspunkt zur Programmierung des Endes 826 der Voreinspritzung 'VE2' 816. Zusätzlich wird mittels des dynamischen Interrupts 'IRQ_dyn_VE2' 824 der Artsteuerbeginn 828 der späteren Voreinspritzung 'VE1' 820 programmiert. Diese Programmierung erfolgt insbesondere anhand der aktuellen Motordrehzahl n, wobei der in den Figuren 2a und 2b gezeigte Offsetwert t_off zu Null gesetzt wird. Da hiermit die Beginnflanke der 'VE1' nur aufgrund der KW-Winkels erfolgt, d.h. die in den Figuren 2a und 2b gezeigten Zeitkomponenten in entsprechende KW-Winkelwerte umgerechnet werden, ist gewährleistet, dass ein etwa auftretender Jitter des KW-DGS nicht zu der beschriebenen Überlappung der Ansteuersignale führt, da dieser automatisch Berücksichtigung findet.

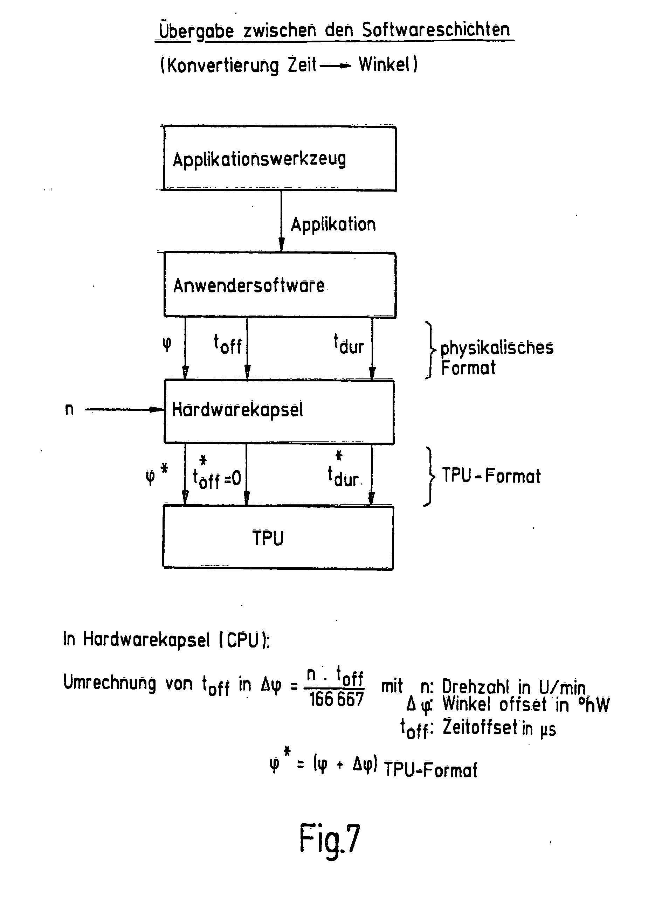

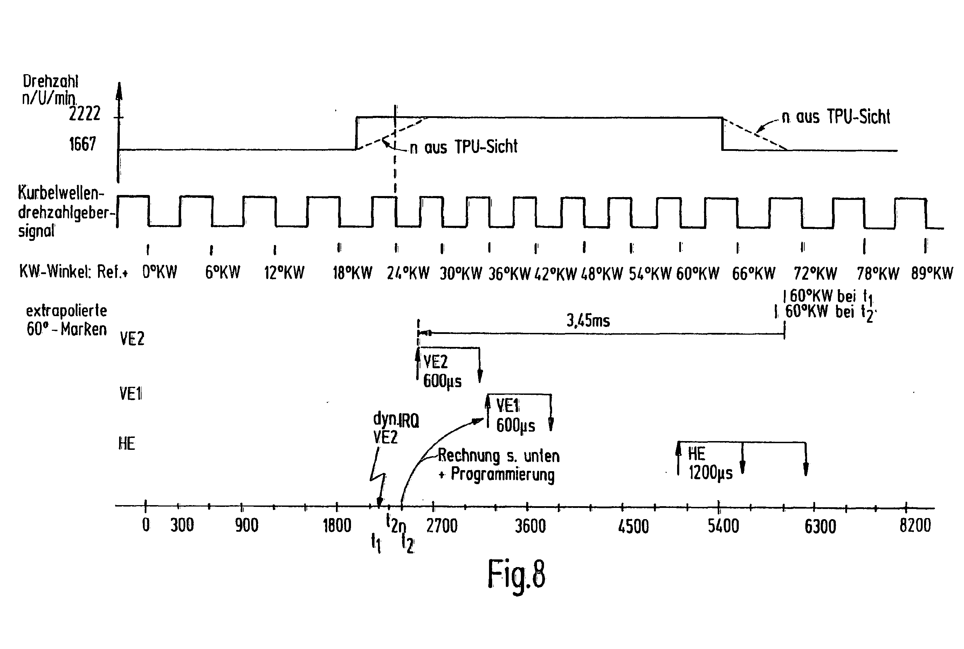

Die vorbeschriebene Vorgehensweise bewirkt ferner automatisch, dass die zeitliche Distanz zwischen Programmierung und Ausführung des Ansteuerbeginns deutlich verkürzt wird. Zusätzlich wird die Zeitkomponente des Beginns der Voreinspritzung 'VE1' 820 auf den KW-Winkel der 'VE1' 820 unter Berücksichtigung der dann aktuellen Motordrehzahl addiert (Fig. 7). Dadurch wird die Gefahr des Ineinanderlaufens von Ansteuerungen weiter reduziert, da die Erhöhung der Motordrehzahl nach der Programmierung die KW-Winkel, gegenüber ihrer zeitlichen Position bei statischer Drehzahl, nach "früh" wandern lässt und eine Zeitkomponente dann den Beginnzeitpunkt stärker nach "früh" bringt als eine Winkeldarstellung. Exemplarisch wird dies in der Fig. 8 gezeigt.

Zum besseren Verständnis dieser Zusammenhänge kann auch folgendes mechanisches Analogon dienen. Die Abfolge der Signalflanken des KW-DGS sei durch ein Gummiband repräsentiert. Bei einer Drehzahlerhöhung wird die Dehnung des Bandes verringert. Der KW-Winkel der Haupteinspritzung 'HE' liegt demzufolge am rechten Ende des Bandes, hingegen der Zeitpunkt des dynamischen Interrupts 'IRQ_dyn_VE2' der Voreinspritzung 'VE2' am linken Ende. Der aus der Zeit-zu-Winkel-Konvertierung resultierende KW-Winkel liegt in der Mitte des Bandes. Durch die nachlassende Dehnung wird die Bandmitte weniger in der Position verändert als das rechte Ende. Am rechten Ende hängt aber die zeitapplizierte Einspritzung wie an einer Stange. Daraus wird deutlich, dass die Änderung aufgrund der Kombination der Winkel- und Zeitkomponente stärkere Auswirkungen auf die Position der Voreinspritzung 'VE1' auf der Zeitachse hat als eine rein winkelbasierte Vorgehensweise.

Die vorbeschriebene Vorgehensweise bewirkt auch, dass die Ansteuerung der früheren Voreinspritzung 'VE2' bereits in der zweiten Rechnereinheit vorberechnet werden kann, wobei die Ansteuerung der nachfolgenden Voreinspritzung 'VE1' ggf. noch zeitlich dynamisch, d.h. in Abhängigkeit vom aktuellen zeitlichen Verlauf des KW-DGS, verschiebbar ist, um die genannte Überlappung in den meisten denkbaren Drehzahlsituation sicher verhindern zu können.

Die Fig. 7 zeigt in einer der Fig. 2a entsprechenden Übersicht ein erfindungsgemäßes Steuerprogramm zur Ansteuerung einer vorbeschriebenen Kraftstoffeinspritzanlage. Im Gegensatz zur Fig. 2a werden die vom Anwendungsprogramm bereitgestellten physikalischen Größen Phi, t_off und t_dur mittels der hardwar-nahen Software, unter Berücksichtigung der Motordrehzahl n und des Offsetwertes t_off, im Format der zweiten Rechnereinheit in Phi*, d.h. in reine Winkelgrößen, umgerechnet, wobei die folgenden Formeln zugrundegelegt werden:

$$Phi^* = Phi + delta\_Phi, \text{ wobei}$$

$$delta\_Phi = n \times t\_off / 166667 \qquad (1).$$

Schließlich zeigt die Fig. 8 in einer der Fig. 5 entsprechenden Darstellung die erfindungsgemäße Ansteuerung einer Kraftstoffeinspritzanlage mit zwei Voreinspritzungen bei kurzzeitig sich erhöhender Motordrehzahl n. Wie im oberen Teil des Diagramms zu ersehen, liegt wiederum eine Erhöhung der Motordrehzahl n von 1667 auf 2222 U/min in einem Zeitfenster zwischen 2000 und 5400 μs gemäß der im unteren Teil dargestellten Zeitskala vor. Diese vorübergehende Drehzahlerhöhung bewirkt die im oberen Teil ebenfalls dargestellte Änderung des KW-DGS, wobei in dem genannten Zeitfenster die Perioden des KW-DGS-Rechtecksignals aufgrund der Drehzahlerhöhung verkürzt sind.

6

Die zeitlichen Vorgaben für die beiden Voreinspritzungen 'VE2' und 'VE1' entsprechen denen der Fig. 5 und daher wird dazu auf die entsprechenden Ausführungen zu Fig. 5 verwiesen.

Die Rechnereinheiten 100, 312 führen nun die Programmierung der Beginnflanke für 'VE1' im dynamischen Interrupt 'IRQ_dyn_VE2' der vorherigen Vöreiispritzung 'VE2' durch, und zwar gemäß obiger Formel (1) mittels des Wertes deltä_Phi und insbesondere basierend auf der Motordrehzahl n. Die zweite Rechnereinheit führt dabei erfindungsgemäß eine Umrechnung von Zeit- und Winkelgrößen durch. Zudem extrapoliert die zweite Rechnereinheit die Änderung in n linear und berücksichtigt den bei fallender Flanke des KW-DGS sich ergebenden extrapolierten Wert für n. Der programmierte Wert für 'IRQ_dyn_VE2' liegt vorliegend bei 't1' Der bei t2a sich ergebende extrapolierte Wert n = 1900 U/min würde demnach bei der genannten fallenden Flanke des KW-DGS vorliegen. Für den Zeitpunkt bzw. KW-DGS-Winkelwert der Beginnflanke ergibt sich somit

$$\text{Delta\_Phi} = 1900 \ \text{U/min} \ \text{x} \ 2100 \ \mu\text{s} \ / \ 166667,$$

was einem Delta_Phi von etwa 24° KW entspricht. Insgesamt ergibt sich somit für die Beginnflanke Phi_VE1= 36° KW. Dadurch ist gewährleistet, dass die beiden Voreinspritzungen 'VE2' und 'VE1' nicht überlappen.

Es bleibt anzumerken, dass das vorbeschriebene Verfahren zum Betrieb einer Kraftstoffeinspritzanlage besonders vorteilhaft im mittleren bis hohen Drehzahlbereich einsetzbar ist, da hier die Einspritzungen zeitlich enger beieinanderliegen und gleichzeitig der durch die Auflösung bedingte Fehler bei der Konvertierung der Zeitkomponente in einen KW-Winkel kleiner ist.

**Patentansprüche**

1. Verfahren zum Betrieb einer Kraftstoffeinspritzanlage für einen wenigstens einen Zylinder aufweisenden Verbrennungsmotor, wobei die Kraftstoffeinspritzanlage wenigstens einen Aktor aufweist und jedem Zylinder wenigstens ein Aktor zur Einspritzung von Kraftstoff in den Zylinder durch Laden oder Entladen des Aktors zugeordnet ist, und wobei die Einspritzung von Kraftstoff in wenigstens zwei zeitlich aufeinander folgenden, programmierten Einspritzphasen (808, 816, 820,) erfolgt, **dadurch gekennzeichnet, dass** die Programmierung der Einspritzphasen mittels statischer (802, 804) und dynamischer Interrupts (824, 830, 812)erfolgt, dass die dynamischen Interrupts (824, 830, 812) im festen Abstand vor Beginn der Einspritzphase (816, 820, 808) erfolgen,
dass das Ende (826, 810) der Einspritzphasen (816, 820, 808) ausgehend von dem jeweiligen dynamischen Interrupt (824, 830, 812) programmiert wird,
dass eine Beginnflanke (814) einer vorausgehenden Einspritzphase (816) ausgehend von dem statischen Interrupt (802) programmiert wird,
dass eine Beginnflanke (818) der nachfolgenden Einspritzphase (820) ausgehend von dem dynamischen Interrupt (824) der vorausgehenden Einspritzphase (816) programmiert wird,

2. Verfahren nach Anspruch 1, **dadurch gekennzeichnet, dass** in einem dynamischen Interrupt (830) einer unmittelbar vor einer Einspritzphase (808) erfolgenden weiteren Einspritzphase (820) geprüft wird, ob die Dauer dieser Einspritzphase (820) mit dem Beginn (832) der nachfolgenden Einspritzphase (808) zeitlich überlappt, und im Falle des Bevorstehens einer solchen Überlappung die Dauer dieser weiteren Einspritzphase (820) entsprechend verkürzt wird.

3. Verfahren nach einem der vorhergehenden Ansprüche zum Betrieb einer eine Motordrehzahl und einen Kurbelwellenwinkel berücksichtigenden Kraftstoffeinspritzanlage, wobei der Beginnzeitpunkt einer nachfolgenden Einspritzphase mittels einer auf den Kurbelwellenwinkel bezogenen Winkelkomponente und einer Zeitkomponente erfolgt, **dadurch gekennzeichnet, dass** bei der Festlegung des Beginnzeitpunktes (828) einer nachfolgenden Einspritzphase (820) die Zeitkomponente, in Abhängigkeit von der aktuellen Motordrehzahl, in die Winkelkomponente eingerechnet wird.

4. Verfahren nach einem der vorhergehenden Ansprüche, **dadurch gekennzeichnet, dass** der Beginnzeitpunkt (828) einer nachfolgenden Einspritzphase (820) im Falle eines wahrscheinlichen Ineinanderlaufens der nachfolgenden Einspritzphase (820) mit einer vorausgehenden Einspritzphase (816) nach spät verschoben wird.

5. Verfahren nach Anspruch 4, **dadurch gekennzeichnet, dass** die niederpriore oder nachfolgende Einspritzphase nicht ausgeführt wird.

**6.** Verfahren nach einem der vorhergehenden Ansprüche, **dadurch gekennzeichnet, dass** die Berechnung des Beginns (828) einer nachfolgenden Einspritzphase (820) möglichst zeitnahe an der jeweils vorausgehenden Einspritzphase (816) erfolgt.

**7.** Verfahren nach Anspruch 6, **dadurch gekennzeichnet, dass** die Berechnung nur bei mittleren und hohen Drehzahlen durchgeführt wird.

**Claims**

**1.** Method for operating a fuel injection system for an internal combustion engine having at least one cylinder, wherein the fuel injection system has at least one actuator and each cylinder is assigned at least one actuator for the injection of fuel into the cylinder by charging or discharging the actuator, and wherein the injection of fuel takes place in at least two chronologically successive, programmed injection phases (808, 816, 820,), **characterized in that** the programming of the injection phases is carried out by means of static interrupts (802, 804) and dynamic interrupts (824, 830, 812), **in that** the dynamic interrupts (824, 830, 812) are carried out at a fixed interval before the start of the injection phase (816, 820, 808), **in that** the end (826, 810) of the injection phases (816, 820, 808) is programmed starting from the respective dynamic interrupt (824, 830, 812), **in that** a starting edge (814) of a preceding injection phase (816) is programmed starting from the static interrupt (802), **in that** a starting edge (818) of the following injection phase (820) is programmed starting from the dynamic interrupt (824) of the preceding injection phase (816).

**2.** Method according to Claim 1, **characterized in that** in a dynamic interrupt (830) of a further injection phase (820) which takes place directly before an injection phase (808) it is tested whether the duration of this injection phase (820) overlaps chronologically with the start (832) of the subsequent injection phase (808), and if such an overlap is eminent the duration of this further injection phase (820) is shortened correspondingly.

**3.** Method according to one of the preceding claims for operating a fuel injection system which takes into account the engine speed and a crankshaft angle, when the starting time of a subsequent injection phase occurs by means of an angle component related to the crankshaft angle, and a time component, **characterized in that**, when the starting time (828) of a subsequent injection phase (820) is defined the time component is included in the angle component as a function of the current engine speed.

**4.** Method according to one of the preceding claims, **characterized in that** the starting time (828) of a subsequent injection phase (820) is displaced in the retarded direction if the subsequent injection phase (820) will probably run into a preceding injection phase (816).

**5.** Method according to Claim 4, **characterized in that** the low-priority or subsequent injection phase is not carried out.

**6.** Method according to one of the preceding claims, **characterized in that** the start (828) of a subsequent injection phase (820) is calculated as close in time as possible to the respectively preceding injection phase (816).

**7.** Method according to Claim 6, **characterized in that** the calculation is carried out only at medium and high rotational speeds.

**Revendications**

**1.** Procédé de commande d'une installation d'injection de carburant pour un moteur à combustion interne ayant au moins un cylindre, l'installation d'injection de carburant présentant au moins un actionneur selon lequel on associe à chaque cylindre au moins un actionneur destiné à l'injection de carburant dans le cylindre en chargeant ou déchargeant l'actionneur, l'injection de carburant se déroulant dans au moins deux phases d'injection programmées consécutives dans le temps (808, 816, 820),
**caractérisé en ce que**
la programmation des phases d'injection est assurée par des interruptions statiques (802, 804) et dynamiques (824, 830, 812), les interruptions dynamiques (824, 830, 812) ont lieu à une distance fixe avant le début de la phase d'injection (816, 820, 808),
la fin (826, 810) des phases d'injection (816, 820, 808) est programmée à partir de l'interruption dynamique (824, 830, 812) respective,

un flanc de début (814) d'une phase d'injection (816) précédente est programmée à partir de l'interruption statique (802), et
un flanc de début (818) de la phase d'injection (820) suivante est programmé à partir de l'interruption dynamique (824) de la phase d'injection (816) précédente.

2. Procédé selon la revendication 1,
**caractérisé en ce que**
dans une interruption dynamique (830) d'une autre phase d'injection (820) ayant lieu immédiatement avant une phase d'injection (808), on vérifie si la durée de cette phase d'injection (820) se chevauche dans le temps avec le début (832) de la phase d'injection (808) suivante et, en cas de l'imminence d'un tel chevauchement, la durée de cette autre phase d'injection (820) est raccourcie en conséquence.

3. Procédé selon l'une quelconque des revendications précédentes permettant le fonctionnement d'une installation d'injection de carburant tenant compte d'une vitesse de rotation du moteur et d'un angle de vilebrequin, le début d'une phase d'injection ayant lieu au moyen d'une composante d'angle rapportée à l'angle de vilebrequin et d'une composante de temps,
**caractérisé en ce que**
lors de la fixation du début (828) d'une phase d'injection (820) suivante, on inclut la composante de temps à la composante d'angle en fonction de la vitesse de rotation du moteur du moment.

4. Procédé selon l'une quelconque des revendications précédentes,
**caractérisé en ce que**
le début (828) d'une phase d'injection suivante (820) est retardé dans le cas d'une interférence probable de la phase d'injection suivante (820) avec la phase d'injection précédente (816).

5. Procédé selon la revendication 4,
**caractérisé en ce qu'**
on exécute la phase d'injection moins prioritaire ou suivante est exécutée.

6. Procédé selon l'une quelconque des revendications précédentes,
**caractérisé en ce que**
le calcul du début (828) d'une phase d'injection suivante (820) est effectué le plus près possible dans le temps de la phase d'injection précédente (816).

7. Procédé selon la revendication 6,
**caractérisé en ce que**
le calcul est effectué uniquement à des vitesses de rotation moyennes et élevées.

Fig.1 (Stand der Technik)

Applikationswerkzeug ⌇—402

↓ Applikation

Anwendersoftware ⌇—400

↓ $\varphi$    ↓ $t_{off}$    ↓ $t_{dur}$

Hardwarekapsel ⌇—404

↓ $\varphi^*$    ↓ $t_{off}^*$    ↓ $t_{dur}^*$

TPU ⌇—406

## Fig.2a (Stand der Technik)

$t_{off\,set}$

$\varphi$

$t_{dur}$

Ansteuerbeginn    Ansteuerende    $\varphi_{abs}$    $\varphi_{OT}$    $\varphi/t$

## Fig.2b
(Stand der Technik)

stat. IRQ
VE

stat. IRQ
HE

dyn. IRQ
VE2

dyn. IRQ.
VE1

dyn. IRQ
HE

programmiert Ende HE

programmiert Ende VE2

programmiert Ende VE1

400µs

400µs

400µs

504

502

500

508

520

524

VE2

524

VE1

524

HE

OT 506

510

518

ca. 78°KW

522

512

ca. 138°KW

516

514

programmiert Beginn HE

programmiert Beginn VE2

programmiert Beginn VE1

φ/t

## Fig.3 (Stand der Technik)

Fig.4 (Stand der Technik)

EP 1 403 495 B1

Drehzahl n/U/min

2222

1667

Arbeitswellendrehzahlgebersignal

W-Winkel: Ref.+   0°KW   6°KW   12°KW   18°KW   24°KW 30°KW 36°KW 42°KW 48°KW 54°KW 60°KW   66°KW   72°KW   78°KW 89°KW

extraplierte
t*-Marken

60°KW bei t3  60°KW bei t1
60°KW bei t2

VE2                                          3,45ms

VE2
600µs

VE1                              2,1ms

VE1
600µs

HE

Ansteuerungen ineinander!
⚠ Folge: Notentladung bei Beginn VE1!

HE
1200µs

dyn.VE2

0   300   900   1800   2700   3600   4500   5400   6300   8200  t µs

t1   t2  t3

Fig.5   (Stand der Technik)

EP 1 403 495 B1

14

programmiert Beginn VE1 mit $t_{off}=0$.
+ aktueller Drehzahl   +ggf. Verschiebung nach n spät

programmiert Ende VE1
+ggf. Verkürzung

programmiert Ende HE.

dyn.IRQ
VE2

dauerprogrammiert
Ende VE2

dyn.IRQ
VE1

dyn.IRQ
HE

stat.IRQ
VE

stat.IRQ
HE.

400µS

814

808

810

822

830

820

800

828

832

VE2

VE1

HE

OT

$\varphi/t$.

ca. 78°KW

ca. 138°KW

806

816

826

818  812

824

programmiert Beginn VE2

programmiert Beginn HE

802

804

Fig.6

EP 1 403 495 B1

## Übergabe zwischen den Softwareschichten

(Konvertierung Zeit —→ Winkel)

```
┌─────────────────────────────────┐
│      Applikationswerkzeug       │
└─────────────────────────────────┘
              │ Applikation
              ▼
┌─────────────────────────────────┐
│       Anwendersoftware          │
└─────────────────────────────────┘
     │        │              │
     φ       $t_{off}$      $t_{dur}$      } physikalisches
     ▼        ▼              ▼             } Format
┌─────────────────────────────────┐
n ──→│       Hardwarekapsel            │
└─────────────────────────────────┘
     │        │              │
    $φ^{*}$  $t^{*}_{off}=0$  $t^{*}_{dur}$   } TPU-Format
     ▼        ▼              ▼
┌─────────────────────────────────┐
│              TPU                │
└─────────────────────────────────┘
```

In Hardwarekapsel (CPU):

Umrechnung von $t_{off}$ in $\Delta φ = \dfrac{n \cdot t_{off}}{166\,667}$ mit n: Drehzahl in U/min

$\Delta φ$: Winkel offset in °hW

$t_{off}$: Zeitoffset in μs

$φ^{*} = (φ + \Delta φ)$ TPU-Format

# Fig.7

Fig.8

EP 1 403 495 B1